Europäisches Patentamt

**European Patent Office**

**Office européen des brevets**

(11) Publication number: **0 114 740**
**A2**

# EUROPEAN PATENT APPLICATION

(21) Application number: **84300266.8**

(22) Date of filing: **17.01.84**

(51) Int. Cl.³: **B 60 N 1/08**

(30) Priority: **21.01.83 GB 8301644**

(43) Date of publication of application:
**01.08.84 Bulletin 84/31**

(84) Designated Contracting States:
**DE FR GB IT SE**

(71) Applicant: **TI COX LIMITED**
**Triumph Road**
**Nottingham NG7 2DD(GB)**

(72) Inventor: **Babbs, Frederick William**
**Mountfield 102A Cropwell Road**
**Radcliffe-on-Trent Nottingham(GB)**

(74) Representative: **Arthur, George Fitzgerald et al,**
**KILBURN & STRODE 30, John Street**
**London WC1N 2DD(GB)**

(54) Slide assembly.

(57) A seat (11) is fitted to a vehicle body (12) through a pair of slide assemblies (13) permitting fore-and-aft adjustment of the seat. Each slide assembly has a seat slide (15) which is integral with or secured to a part (29,51) of the seat itself, so that a compact assembly is achieved and the slide gets strength from the part of the seat. The body slide (14) can be supplied assembled with the one slide in the seat, there being two assemblies one at each side of the seat, and they can be secured to the body of the vehicle through a bracket (31) which can be one of a number of different designs selected to suit the particular vehicle body in which it is being used, or can be capable of some deformation to accommodate manufacturing tolerance in the body of the vehicle.

EP 0 114 740 A2

# SLIDE ASSEMBLY

This invention relates to a slide assembly for example for the mounting of a vehicle seat in a manner to permit fore-and-aft adjustment to suit the occupant. One example of such a seat slide is the subject of European Patent Application No. 1301464 published under the No. 0037726 on the 14th october, 1981.

An object of the present invention is to provide a design of such a slide assembly which can permit easy fitting in spite of manufacturing tolerance of the vehicle body in which it is to be fitted, or in spite of the need to fit the seat in vehicles of various designs.

Another object is to provide a design which is neat and compact and a further object is to provide a design which can achieve some vertical rigidity from components of the vehicle seat itself.

According to the present invention, a vehicle seat slide assembly comprising relative slidable fore-and-aft slides and means for attaching one of the slides to a part of a vehicle body, is characterised by anyone of the following features, or any combination of those features.

The other slide (that is the slide other than the one for attaching to a part of a vehicle body) may be integral with, or secured to, a vertical flange which is in turn integral with, or secured to, the side of a vehicle seat. In a simple case a vertical side wall of the vehicle seat is formed at its lower edge into the form of the said other slide, but in a more complicated arrangement a vertical web extending upwards from the said other slide can be connected to a vertical web forming
a part of the seat through means providing height
adjustment.

According to another feature, the slides
are located in relation to each other for fore-
and-aft adjustment, through rows of balls or rollers
including one row or two rows arranged to transfer
the vertical loads from the seat slide to the body
slide, and two rows or one row for providing lateral
location between the slides. The slides can be
normally out of contact with each other other than
through the balls, and have respective co-operating
horizontal surfaces between which the balls in
one or two rows run, but an additional row or rows
of balls can be disposed between the slides to
prevent lateral movement or relative angular movement
and keep the load supporting balls properly located.

According to another feature, the adjustment
means comprises a bracket capable of adjustment
or deformation , or is one of a number of alternative
brackets, or both, and that enables the slide assembly
itself to be of precision manufacture but nevertheless
to be capable of being fitted into a vehicle body
which may be one of a number of different designs
or one in which manufacturing tolerances are greater
than can be accommodated by the slides so that
such tolerances can be accommodated by perhaps
bending or drilling the bracket.

That method of attachment enables the fore-
and-aft adjustment slides to be formed integrally
or in a unitary assembly with the seat with one slide under each side, and then the complete seat with its slides can be fitted to the vehicle body by use of the appropriate brackets. That enables the slide to achieve strength and rigidity from the material of the seat, allows a very compact design to be achieved, and permits the slides to be manufactured with great precision, and is a considerable advantage over the usual practice which is to provide a pair of slides and bolt one of the slides to the underside of the seat and the other of the slides to the floor of the vehicle.

The invention may be carried into practice in various ways, and certain embodiments will now be described by way of example, with reference to the accompanying drawings in which:-

FIGURES 1 and 2 are diagrammatic views from the front showing two different ways in which a seat can be mounted on the floor of a vehicle using a pair of slide assemblies in accordance with the invention;

FIGURE 3 is a front view of a preferred form of slide assembly;

FIGURE 4 is a side elevation of the slide assembly of FIGURE 3 to a reduced scale;

FIGURE 5 is a plan view of a part of the assembly of FIGURE 4;

FIGURE 6 is a view corresponding to FIGURE 3 of a modified slide assembly;

FIGURE 7 is a view corresponding to FIGURE 4 of the assembly of FIGURE 6; and

FIGURE 8 is a view corresponding to FIGURE 3 of another form of slide assembly.

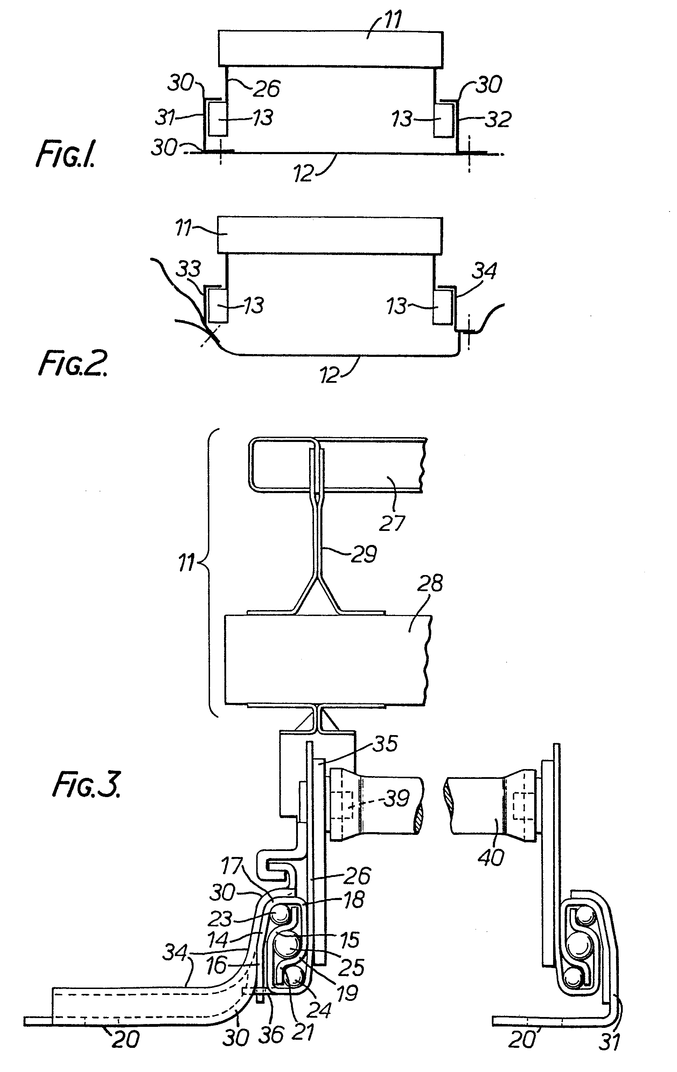

A seat as indicated generally at 11 in FIGURES 1 and 2 is mounted from a vehicle floor 12 by means of a pair of slide assemblies 13 extending in a fore-and-aft direction one under each side of the seat.

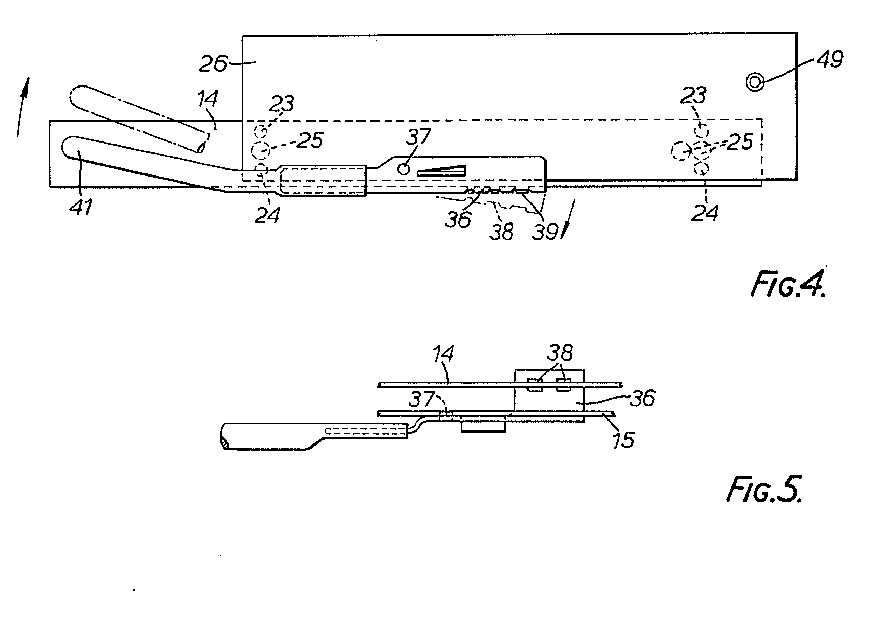

Each slide assembly as seen from the front is as shown in FIGURE 3, and comprises a pair of interlinked slides 14 and 15 with the same cross section, which may _____

be described as being similar to a shepherd's crook, in that from a web 16 the section bends over with one hand as indicated at 17, 18 and 19 and then bends back with the other hand as indicated at 21.

The two slides can be assembled together by longitudinal sliding, and are retained in relative location against both twisting and lateral movement by three rows of balls, there being one ball of each row visible in FIGURE 3.

There is a row of balls 23 between the bend 17 of one hand of the slide 14 and the bend 21 of the other hand of the slide 15, and another row of balls 24 between the bend of one hand of the other slide 15 and the bend 21 of the other hand of the one slide 14. Then the third row of balls of larger diameter as shown at 25 is positioned between the bends of the one hand 19 of the two slides.

The dimensions are such that the sections have to be sprung slightly to get the balls into position so that they are slightly preloaded to prevent rattling, and in the assembled condition the two slides are out of contact with each other so that fore-and-aft adjustment occurs purely by rolling of the balls 23, 24, and 25 without any sliding between co-operating surfaces of the slides.

The other slide 15 leads to an upstanding web 26 which is connected in a conventional manner to the underside of the seat 11, possibly with the inclusion of some form of height adjustment mechanism.

The one slide 14 is welded or bolted to a bracket  which may be of any of the forms shown at 31,32,33 and 34 in FIGURES 1 and 2, to suit the shape of the floor of the particular vehicle in which the slide is being fitted.  The attachments can have provision for some deformation ( perhaps simple bending about a fore-and-aft axis 30 or some adjustment laterally or angularly  as at 20) to allow for inaccuracies in vehicle manufacture, and that enables accurately manufactured slide assemblies to be used in a wide range of vehicles.

It will be observed from FIGURE 3 that the balls 23,24 and 25 run on axes of which two are only a little displaced from a vertical plane, through the other, and that gives the slide assembly good vertical rigidity.

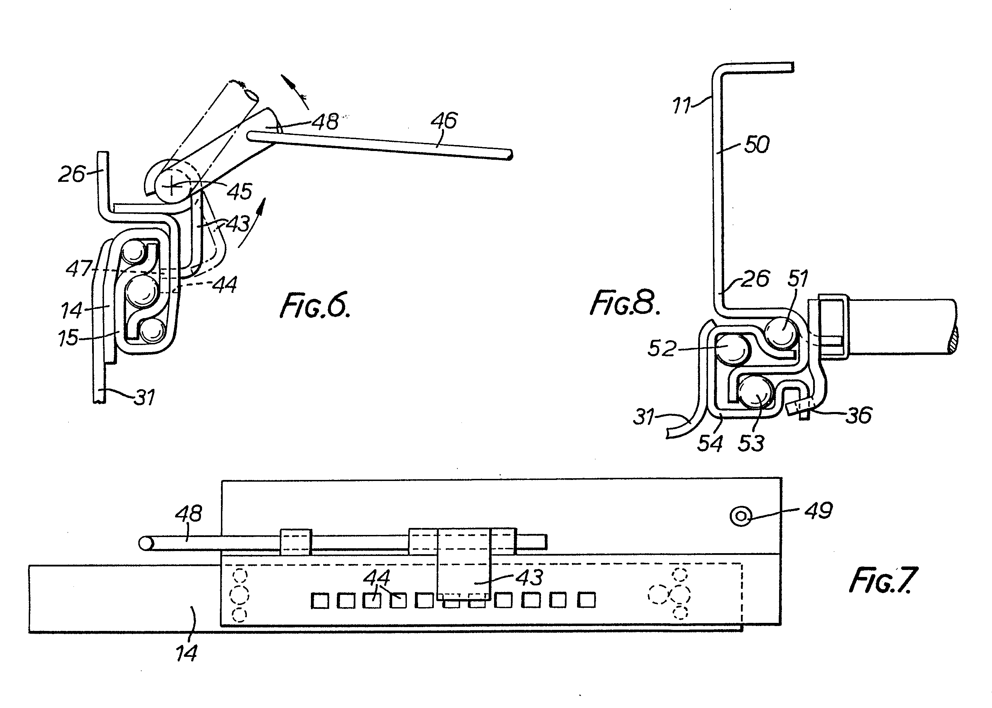

In a preferred arrangement there are two balls in which of the rows 23 and 24, one at the front and one at the rear, as shown in FIGURES 4 and 7, whereas there are three large balls 25 in the central race namely one at the front, and two at the back where the loads tend to be higher.

The weight of the slide 15 and the seat 11 above it is carried on the slide 14 primarily through the balls 25, and the balls 23 and 24 are used to achieve proper lateral location to ensure that the bend 19 of the slide 15 sits on the balls 25 which in turn sit properly on the bend 19 on the slide 14.

The seat 11 includes a cushion supporting part 27 and a stiffener 28 joined by a vertical flange 29 which continues below the stiffener 28 and is welded to a vertical plate 35 which can slide vertically in relation to the web 26 when a pin 39 is disengaged.  That allows the height of the seat to be adjusted after which the pin 39 is engaged, and the plate 35 can be considered to be fast with the web 26.  The transverse tube 40 ensures that adjustment of height  is achieved at both slide assemblies, one at each side of the seat, at the same time, and there can be a similar arrangement both at the front and at the rear of the seat.  Such a height adjustment mechanism is shown in FIGURE 7 of European Patent Application No. 81301464.4 published in October, 1981, and is merely described here as indicating how it can be included in an embodiment of the present invention.

Once the pin 39 has been engaged, it will be clear that the vertical plate 29 forming an integral part of the seat 11 is effectively  fast with the web 26 which is an integral part of the slide, and that makes for a very neat and space-saving arrangement of the fore-and-aft slide while giving the whole mounting good vertical rigidity.

FIGURES 1 and 2 show how the mounting can be on a floor, or on a sill, or on a tunnel, and it will be clear that the brackets 31,32,33,34 can be designed to have sufficient tear strength to carry such loads as may be demanded by seat belt restraint systems anchored to the seat fixing.

For locating the slides in a selected position of fore-and-aft adjustment, a trigger 36 may be used, and that can be pivotally mounted as shown in FIGURES 4 and 5, at 37 on one slide and have windows 38 arranged to engage castellations 39 in the lower edge of the other slide. It can be released by a transverse bar 41 underneath the front of the seat for pivoting the trigger at 37 in a manner which is known in itself.

FIGURES 6 and 7 show an alternative arrangement in which a locking tongue 43 pivotally mounted on one slide 15 about a fore-and-aft axis 45 has two teeth 47 which can engage in two adjacent holes 44 in a line of holes in the slide 14. Release is by a lever 48 united to the tongue at 45 and connected through a connecting rod 46 with a corresponding lever and tongue on the slide assembly under the other slide of the seat.

A seat belt fixing is shown at 49 in FIGURES 4 and 7 .

The top of a bracket 31 is shown in FIGURE 6 welded to one slide 14.

FIGURE 8 shows an alternative arrangement which is somewhat similar to that of FIGURE 3, although the arrangement is simpler in that there is no provision for height adjustment of the seat 11, and it is in fact an integral component 51 of the seat which constitutes the vertical web 26 carrying one of the slides.

In the arrangement of FIGURE 8 the slide sections are not the same as each other, as is the case with FIGURE 3, but it can be seen how they have co-operating sections providing races for three lines of balls 51,52,and 53. In this case the weight of the seat 11 is transferred to the lower slide 54 primarily through the balls

51 and 53, whereas the balls 52 are used for lateral and angular location to ensure proper seating on the balls 51 and 53. The lower slide 54 is secured to the floor of the vehicle by a similar bracket 31. The trigger 36 can also be seen in FIGURE 8 and that can operate generally in a manner similar to the method described with reference to FIGURES 4 and 5.

The arrangement of FIGURE 8 is a particularly neat and compact arrangement.

The slide can be considered to be a part of the seat frame with a double advantage of saving weight and achieving rigidity in the vertical plane of the member 51.

CLAIMS

1. A vehicle seat slide assembly comprising relatively slidable fore-and-aft slides (14,15) and means (31,33) for attaching one of the slides (14) to a part of the vehicle body characterised in that the means is a bracket capable of adjustment or deformation or is one of a number of alternative brackets, or both, whereby the slide assembly can be of precision manufacture but can be fitted to vehicle bodies of inaccurate manufacture or of various designs.

2. A vehicle seat slide assembly comprising relatively slidable fore-and-aft slides (14,15) and means (31,33) for attaching one of the slides (14) to a part of a vehicle body characterised in that the other slide (15) is integral with, or secured to, a vertical flange (26) which is in turn integral with, or secured to, the side of a vehicle seat (11).

3. A vehicle seat slide assembly as claimed in Claim 2 characterised in that the slides are located in relation to each other for fore-and-aft adjustment through rows of balls or rollers including one row or two rows (51,53) arranged to transfer vertical loads from the seat slide to the body slide, and two rows (23,24) or one row (52) for providing lateral location between the slides.

4. A vehicle seat slide assembly as claimed in Claim 2 or Claim 3 characterised in that the attaching means is a bracket capable of adjustment or deformation

or is one of a number of alternative brackets, or both, whereby the slide assembly can be of precision manufacture but can be fitted to vehicle bodies of inaccurate manufacture or of various designs.

5. A vehicle seat slide assembly as claimed in any of the preceding claims in which the slides each have a cross section of crooked form with a curve first of one hand (17,18,19) and then of the other hand (21) and including rows of balls or rollers (23,24,25) holding the slides in lateral relation to each other with the two crooked sectins interlinked while permitting relative longitudinal sliding.

6. A vehicle seat slide assembly as claimed in any of the preceding claims in which the slides (14,15) are normally out of direct contact with each other.

7. A vehicle seat slide assembly as claimed in any of the preceding claims including a trigger (36) adjustably mounted on one slide and arranged to engage in co-operating means (44) on the other slide for retaining the slides in a selected position of fore-and-aft adjustment.

8. A vehicle seat slide assembly as claimed in any of the preceding claims including a height adjustment mechanism (35) included in the vertical flange (26).

3

9.    A vehicle seat formed as an integer with two slide assemblies as claimed in any of the preceding claims, one at each side of the seat, ready for mounting in a vehicle body.

10.    A method of mounting a vehicle seat as claimed in Claim 9 in a vehicle body, characterised in that attaching means (31,33) are engaged with the body slide (14) and then deformed for attachment to the vehicle body, or characterised in that the attaching means (31,33) are selected in accordance with the particular vehicle body.

*Fig.1.*

*Fig.2.*

*Fig.3.*

Fig.4.

Fig.5.

FIG.6.

FIG.8.

FIG.7.

0114740